# EUROPÄISCHE PATENTSCHRIFT

(11) **EP 4 026 460 B1**
(45) Veröffentlichungstag und Bekanntmachung des Hinweises auf die Patenterteilung: **24.07.2024**
(21) Anmeldenummer: 21150396.6
(22) Anmeldetag: 06.01.2021
(51) Int. Cl.: A47J 43/07, A47J 43/25

(54) **SPEISENZUBEREITUNGSGERÄT ZUM SCHNEIDEN VON LEBENSMITTELN, ZERKLEINERUNGSAUFSATZ UND VERFAHREN**
FOOD PREPARATION DEVICE FOR CUTTING FOOD, CRUSHING ATTACHMENT AND METHOD
APPAREIL DE PRÉPARATION DES ALIMENTS PERMETTANT DE COUPER LES ALIMENTS, PIÈCE RAPPORTÉE DE BROYAGE ET PROCÉDÉ

(43) Veröffentlichungstag der Anmeldung: 13.07.2022
(73) Patentinhaber: Vorwerk & Co. Interholding GmbH, 42270 Wuppertal (DE)
(72) Erfinder: Thies, Felix, 42115 Wuppertal (DE); Tepel, Phillipp, 42349 Wuppertal (DE); Landsecker, Kai, 40213 Düsseldorf (DE)
(74) Vertreter: Gille Hrabal Partnerschaftsgesellschaft mbB Patentanwälte

(56) Entgegenhaltungen:
- EP-A1- 2 636 344
- DE-A1- 102010 037 769
- FR-A1- 2 955 475

## Beschreibung

Die Erfindung betrifft ein Speisenzubereitungsgerät mit einem Speisenzubereitungsgefäß und einem drehbaren Mischwerkzeug. Die Erfindung betrifft außerdem einen Zerkleinerungsaufsatz und ein Verfahren.

In der Druckschrift DE10 2010 037 769 A1 wird ein Speisenzubereitungsgerät und zwar eine elektrisch betriebene Küchenmaschine mit einem Speisenzubereitungsgefäß beschrieben. Bodenseitig ist im Speisenzubereitungsgefäß ein Mischwerkzeug vorhanden. Das Speisenzubereitungsgefäß kann in dem Speisenzubereitungsgefäß befindliches Gargut aufheizen.

Die Druckschrift FR 2 955 475 A1 offenbart eine multifunktionale Maschine zur maschinellen Lebensmittelverarbeitung mit Zentrifugenfunktion und Gemüseschneidefunktion. Ein erstes Teil der Maschine umfasst einen Behälter, in den wahlweise eine Zentrifuge oder eine Schneidvorrichtung eingesetzt werden kann.

Es ist möglich, mit einem solchen Mischwerkzeug eine Speise oder Zutaten einer Speise zu zerkleinern, die sich im Speisenzubereitungsgefäß befinden. Zwar kann der Grad einer Zerkleinerung durch Auswahl einer Drehgeschwindigkeit und Drehdauer des Mischwerkzeugs beeinflußt werden. Der Grad einer Zerkleinerung hängt aber auch sehr stark von der Beschaffenheit der Speise bzw. der Zutat ab. Es ist daher schwierig, den Grad einer Zerkleinerung vorherzusehen. Bei kurzer Drehdauer droht, dass nur unvollständig zerkleinert wird. Ein Einfluss auf die Form einer Zerkleinerung ist nicht möglich.

Aus den Druckschriften EP 2 335 534 A1, EP 2 636 344 A1 und WO 2018/007833 A1 sind Küchengeräte mit drehbaren Reibscheiben für ein Zerkleinern von Lebensmitteln bekannt. Durch Drehen der Reibscheibe können Zutaten einer Speise in vorhersehbarer Weise zerkleinert werden. Diese passieren die Reibscheibe und fallen durch Schwerkraft in ein Gefäß hinein.

Es ist Aufgabe der Erfindung, ein weiterentwickeltes Speisenzubereitungsgerät und ein zugehöriges Verfahren bereitzustellen, mit dem eine Speise oder Zutaten einer Speise variabel zerkleinert werden können.

Zur Lösung der Aufgabe dient ein Speisenzubereitungsgerät gemäß Anspruch 1 sowie ein Zerkleinerungsaufsatz gemäß Anspruch 9, sowie ein Verfahren zum Zerkleinern einer Speise gemäß dem Anspruch 15. Vorteilhafte Ausführungsformen ergeben sich aus den Unteransprüchen.

Die Aufgabe wird durch ein Speisenzubereitungsgerät gelöst, welches ein Speisenzubereitungsgefäß und ein drehbares Mischwerkzeug zum Mischen und Zerkleinern einer Speise in einem Bodenbereich des Speisenzubereitungsgefäßes umfasst.

Der Gegenstand des Anspruchs 1 ermöglicht einerseits ein kontrolliertes Zerkleinern durch das Zerkleinerungswerkzeug. Andererseits kann besonders schnell und einfach durch das Mischwerkzeug zerkleinert werden. Um besonders schnell und einfach zerkleinern zu können, hat sich bewährt, dass das Mischwerkzeug mit wenigsten 5000 Umdrehungen pro Minute gedreht werden kann. Eine Drehzahl von wenigstens 5000 Umdrehungen pro Minute ist aber kein wesentliches Merkmal zur Lösung der gestellten Aufgabe, da auch geringere Drehgeschwindigkeiten genügen können, um eine Speise oder eine Zutat einer Speise schnell und einfach zu zerkleinern.

Ein Speisenzubereitungsgerät ist ein Gerät, mit dem zumindest ein Schritt einer Speisenzubereitung erfolgen kann, wie beispielsweise Mischen, Zerkleinern oder Erhitzen. Eine Speise kann fest oder flüssig sein. Eine Speise kann nur ein Lebensmittel umfassen wie zum Beispiel nur Kartoffeln. Eine Speise kann aus verschiedenen Zutaten zusammengesetzt sein wie zum Beispiel Möhren, Erbsen, Zwiebeln, Salz und Pfeffer. Eine Speise kann eine Flüssigkeit umfassen wie zum Beispiel Wasser oder Öl.

Das Speisenzubereitungsgefäß ist für die Zubereitung einer Speise vorgesehen. Zutaten einer Speise, die sich unmittelbar in dem Speisenzubereitungsgefäß befinden, können durch das drehbare Mischwerkzeug zerkleinert werden. Das Speisenzubereitungsgefäß kann Heizelemente umfassen, um Zutaten einer Speise oder eine Speise in dem Speisenzubereitungsgefäß erhitzen zu können. Das Speisenzubereitungsgerät kann aber auch Heizelemente für ein Erhitzen des Speisenzubereitungsgefäßes umfassen, die getrennt von dem Speisenzubereitungsgefäß vorhanden sind. Das Speisenzubereitungsgerät kann eine Aufnahme umfassen, die die Position des Speisenzubereitungsgerät festlegen kann. Die Aufnahme kann eine gefäßartige Vertiefung sein, in die das Speisenzubereitungsgefäß eingesetzt werden kann oder eingesetzt ist. Die Aufnahme kann eine Ablauföffnung umfassen, durch die vermieden wird, dass sich Flüssigkeit in der Aufnahme ansammeln kann. Insbesondere kann das Speisenzubereitungsgefäß von der Ausnehmung abgenommen und so von dem dann verbleibenden Teil des Speisenzubereitungsgeräts getrennt werden. Der dann verbleibende Teil des Speisenzubereitungsgeräts wird nachfolgend auch Basisteil genannt.

Das Speisenzubereitungsgefäß kann einen Deckel umfassen, mit dem das Speisenzubereitungsgefäß geschlossen werden kann. Das Basisteil kann einen Verriegelungsmechanismus umfassen, der den Deckel unlösbar mit dem Speisenzubereitungsgefäß verbinden kann, wenn der Verriegelungsmechanismus verriegelt ist. Ist der Deckel unlösbar mit dem Speisenzubereitungsgefäß verbunden, so muss der Verriegelungsmechanismus entriegelt werden, um den Deckel vom Speisenzubereitungsgefäß abnehmen zu können.

Der Deckel kann zweiteilig sein. Ein erstes Teil eines zweiteiligen Deckels kann eine vergleichsweise kleine Öffnung umfassen, die mit dem zweiten Teil des Deckels verschlossen werden kann. Der zweite Teil des Deckels kann insbesondere manuell entfernt werden und zwar völlig unabhängig vom Verriegelungsmechanismus. Es steht dann eine kleine Öffnung bereit, durch die hindurch eine Speise in das Speisenzubereitungsgefäß auch dann eingefüllt werden können, wenn der erste Teil des Deckels fest mit dem Speisenzubereitungsgefäß durch einen verriegelten Verriegelungsmechanismus verbunden ist. Entsprechendes gilt hier und auch nachfolgend immer auch für ein oder mehrere Zutaten einer Speise.

Der zweite Teil des Deckels kann eine Gefäßform umfassen, der dann beispielsweise als Messbecher dienen kann, um Zutaten dosieren zu können.

Das Speisenzubereitungsgerät umfasst eine Steuerungseinheit, mit der die Drehzahl für das Mischwerkzeug eingestellt werden kann. Durch die Steuerungseinheit kann für das Mischwerkzeug grundsätzlich eine Drehzahl von wenigstens 5000 Umdrehungen pro Minute, vorzugsweise von wenigstens 8000 Umdrehungen pro Minute, eingestellt werden. Das Mischwerkzeug kann also dann mit wenigstens 5000 Umdrehungen pro Minute, vorzugsweise mit wenigstens 8000 Umdrehungen pro Minute, rotieren. Besonders bevorzugt sind 10.000 Umdrehungen pro Minute und mehr möglich. Durch die genannten Drehzahlen wird erreicht, dass Zutaten einer Speise, die sich unmittelbar in dem Speisenzubereitungsgefäß befinden, schnell und zuverlässig zerkleinert werden können. Derart hohe Drehzahlen sind zwar nicht zwingend erforderlich, um Zutaten einer Speise zerkleinern zu können. Derart hohe Drehzahlen erleichtern jedoch ein gewünschtes Zerkleinern. Die Steuerungseinheit muss daher nicht zwingend in der Lage sein, eine Drehzahl von wenigstens 5000 Umdrehungen pro Minute oder wenigstens 8000 Umdrehungen pro Minute einstellen zu können.

Das Speisenzubereitungsgerät und zwar grundsätzlich das Basisteil kann eine Eingabeeinrichtung umfassen wie zum Beispiel einen Schieberegler, einen Drehknopf oder ein berührungsempfindliches Display. Über die Eingabeeinrichtung kann eine gewünschte Drehzahl manuell eingestellt werden. Mithilfe der Eingabeeinrichtung kann beispielsweise eingestellt werden, dass das Mischwerkzeug mit 5000 Umdrehungen pro Minute dreht. Die Steuerungseinheit steuert im Anschluss an eine entsprechende Eingabe dann die Drehzahl so, dass das Mischwerkzeug mit 5000 Umdrehungen pro Minute rotiert. Durch die Eingabeeinrichtung können auch andere Drehzahlen ausgewählt werden, die beispielsweise weniger als 5000 Umdrehungen pro Minute betragen oder mehr. Die Eingabeeinrichtung kann so beschaffen sein, dass Drehzahlen stufenlos verändert werden können. Die Eingabeeinrichtung kann so beschaffen sein, dass verschiedene Stufen und dadurch verschiedene Drehzahlen eingestellt werden können. Die Eingabeeinrichtung kann so beschaffen sein, dass wenigstens fünf verschiedenen Stufen für Drehgeschwindigkeiten vorhanden sind.

Die Steuerungseinheit kann so beschaffen sein, dass die Drehgeschwindigkeit für das Mischwerkzeug auf unter 25000 Umdrehungen pro Minute begrenzt ist, um mechanische Überlastungen zu vermeiden.

Die Steuerungseinheit kann so beschaffen sein, dass diese eine Drehzahl für das Mischwerkzeug automatisiert einstellen kann, so zum Beispiel in Abhängigkeit von einem digital gespeicherten Rezept oder in Abhängigkeit von ein oder mehreren Messwerten, die mithilfe von ein oder mehreren Sensoren ermittelt werden. Die ein oder mehreren Sensoren können Teil des Speisenzubereitungsgeräts sein, so zum Beispiel Teil des Basisteils und/oder des Speisenzubereitungsgefäßes. Es kann sich aber auch um einen externen Sensor handeln wie zum Beispiel ein Thermometer, das drahtlos Daten mit dem Speisenzubereitungsgerät austauschen kann und zwar insbesondere mit dem Basisteil.

Ein erfindungsgemäßes Mischwerkzeug umfasst zumindest eine von einer Welle abstehende Klinge.

Die Klinge umfasst zumindest eine Schneidkante, durch die Zutaten einer Speise besonders gut zerkleinert werden können. Der Querschnitt einer Schneidkante läuft spitz zu. An einer der Schneidkante gegenüberliegenden Seite kann die Klinge eine stumpfe Kante aufweisen. Im Vergleich zur Schneidkante können mit der stumpfen Kante Zutaten einer Speise nicht oder zumindest deutlich schlechter zerkleinert werden.

Das Mischwerkzeug kann eine Mehrzahl von solchen Klingen umfassen. Es können beispielsweise zwei, drei oder vier Klingen vorhanden sein, die beispielsweise radial gleichmäßig verteilt von der Welle abstehen können. In axialer Richtung können Klingen zumindest abschnittsweise in unterschiedlichen Höhen angeordnet sein, um Speise in dem Speisenzubereitungsgefäß oder Zutaten einer Speise in unterschiedlichen Höhen erfassen zu können. Grundsätzlich sind sämtliche klingen nahe beim Grund angeordnet. Die Klingen befinden sich daher beispielsweise nur im unteren Drittel des Speisenzubereitungsgefäßes. Die ein oder mehreren Klingen des Mischwerkzeugs sind also vorzugsweise in der Nähe des Bodens des Speisenzubereitungsgefäßes angeordnet, um Zutaten einer Speise bodennah erfassen zu können.

Die Welle des Mischwerkzeugs kann durch einen Elektromotor des Speisenzubereitungsgefäßes angetrieben werden. Die Steuerungseinheit kann dann die Drehzahl des Elektromotors und damit die Drehzahl des Mischwerkzeugs steuern. Bevorzugt kann die Steuerungseinheit auch die Drehrichtung des Mischwerkzeugs steuern.

Die Welle des Mischwerkzeugs kann durch den Boden des Speisenzubereitungsgefäßes hindurchführen, damit die Welle ein Einfüllen einer Speise in das Speisenzubereitungsgefäß nicht behindert. Die Welle des Mischwerkzeugs kann aber auch von oben in das Speisenzubereitungsgefäß hineinreichen.

Das Mischwerkzeug kann mit dem Speisenzubereitungsgefäß fest verbunden sein. Dies schließt nicht aus, dass das Mischwerkzeug vom Boden des Gefäßes demontiert werden kann, um vor allem das Mischwerkzeug leicht und gründlich von allen Seiten reinigen zu können.

Weist das Mischwerkzeug eine Klinge mit einer Schneidkante und einer gegenüberliegenden stumpfen Kante auf, so kann durch Einstellung der Drehrichtung ausgewählt werden, ob Zutaten einer Speise durch die Schneidkante gut zerkleinert werden oder aber ein gutes Zerkleinern vermieden wird.

Das Speisenzubereitungsgefäß ist flüssigkeitsdicht. Es kann also eine Flüssigkeit in das Speisenzubereitungsgefäß hineingefüllt werden, ohne dass die Flüssigkeit aus dem Speisenzubereitungsgefäß herausfließen kann.

Die Welle des Mischwerkzeugs kann unterhalb des Bodens des Speisenzubereitungsgefäßes ein Kupplungselement umfassen, das mit einem Kupplungselement einer Welle eines Elektromotors gekuppelt werden kann. Im gekuppelten Zustand kann dann eine Drehbewegung des Elektromotors auf das Mischwerkzeug übertragen werden. Durch Vorsehen von solchen Kupplungselementen kann erreicht werden, dass das Speisenzubereitungsgefäß von dem übrigen Teil des Speisenzubereitungsgefäß gelöst werden kann. Die beiden Kupplungselemente verbinden also die beiden Wellen drehfest miteinander und zwar grundsätzlich in beide Drehrichtungen. Es ist nicht erforderlich, dass die beiden Kupplungselemente die beiden Wellen in axialer Richtung miteinander verbinden. Ganz im Gegenteil ist dies sogar nachteilhaft, weil dann ein Abnehmen des Speisenzubereitungsgefäßes behindert wird.

Das Speisenzubereitungsgerät umfasst einen Auffangkorb, der in das Speisenzubereitungsgefäß eingesetzt werden kann oder eingesetzt ist. Befindet sich eine Zutat einer Speise in dem Auffangkorb, dann befindet sich die Zutat nicht unmittelbar im Speisenzubereitungsgefäß. Eine Zutat, die sich in dem Auffangkorb befindet, kann durch das Mischwerkzeug weder gemischt noch zerkleinert werden.

Das Speisenzubereitungsgerät umfasst ein drehbares Zerkleinerungswerkzeug zum Zerkleinern von Speisen oder von Zutaten einer Speise. Das Zerkleinerungswerkzeug ist relativ zu dem Auffangkorb derart angeordnet oder anordbar, dass eine Speise oder Speisezutaten nach der Zerkleinerung mittels des Zerkleinerungswerkzeugs schwerkraftbedingt nach unten fallen, um im Auffangkorb aufgefangen zu werden. Der Auffangkorb verhindert dadurch, dass die durch das Zerkleinerungswerkzeug zerkleinerte Speise oder zerkleinerte Zutaten einer Speise durch das Mischwerkzeug nicht weiter zerkleinert werden können.

Ein Auffangkorb kann flüssigkeitsdicht sein wie das Speisenzubereitungsgefäß. Ein Auffangkorb kann aber zum Beispiel siebförmig sein. Die Funktion des Auffangkorbs ist es, zerkleinerte Zutaten einer Speise daran zu hindern, durch das Mischwerkzeug weiter zerkleinert zu werden. Dies kann durch siebförmige Wände des Auffangkorbs erreicht werden. Daher müssen die Wände und/oder der Boden des Auffangkorbs nicht zwingend flüssigkeitsdicht sein. Ein flüssigkeitsdichter Auffangkorb ist aber besonders zu bevorzugen, da dieser besonders zuverlässig verhindert, dass zerkleinerte Speise oder zerkleinerte Zutaten, die zerkleinert worden sind, unplanmäßig in das Speisenzubereitungsgefäß gelangen

Durch das drehbare Zerkleinerungswerkzeug ist es möglich, Zutaten einer Speise oder eine Speise sehr kontrolliert in gewünschter Weise zu zerkleinern. So kann beispielsweise eine Zutat einer Speise nur streifenförmig zerkleinert werden, wenn das Zerkleinerungswerkzeug entsprechend beschaffen ist. Mit einem Mischwerkzeug ist es nicht möglich, derart kontrolliert in gewünschter Weise zu zerkleinern. Durch den Auffangkorb wird im Anschluss an dieses kontrollierte Zerkleinern in gewünschter Weise verhindert, dass das Mischwerkzeug Zutaten einer Speise weiter zerkleinert, was das angestrebte Ergebnis zerstören würde.

Das erfindungsgemäße Speisezubereitungsgerät ist damit in der Lage, sowohl in gewünschter Weise zu zerkleinern als auch in weniger kontrollierter Weise, was dann aber besonders schnell und einfach möglich ist.

Der Handhabungsaufwand ist auch deshalb gering, weil das Mischwerkzeug nicht entfernt werden muss, um in kontrollierter Weise zerkleinern zu können. Das Mischwerkzeug kann also während der Zubereitung einer Speise dauerhaft mit dem Speisezubereitungsgefäß verbunden sein und dennoch ist es möglich, kontrolliert in gewünschter Weise zu zerkleinern.

Das Zerkleinerungswerkzeug ist in Bezug zu dem Auffangkorb insbesondere derart angeordnet oder anordbar, dass Speisen oder Zutaten einer Speise beim Eintritt in den Auffangkorb mittels des Zerkleinerungswerkzeugs zerkleinert werden. Das Speisenzubereitungsgerät kann dann den Auffangkorb umfassen. Nach der Zerkleinerung fällt eine Speise oder eine Speisenzutat schwerkraftbedingt nach unten, um im Auffangkorb aufgefangen zu werden. Somit passiert die Speise bzw. die Zutat das Zerkleinerungswerkzeug, um anschließend unterhalb davon aufgefangen zu werden. Die Speise bzw. die Zutat passiert das Zerkleinerungswerkzeug nur einmal, sodass ein besonders definierter Zerkleinerungsprozess möglich ist. auch kann dadurch sichergestellt werden, dass die Speise bzw. die Zutat vollständig vom Zerkleinerungswerkzeug erfasst werden. Es wird so sichergestellt, dass vollständig in gewünschter Weise zerkleinert wird.

Ein Speisenzubereitungsgerät mit einem in einem Speisenzubereitungsgefäß drehbaren Misch- oder Schneidwerkzeug, das nahe beim Grund des Speisenzubereitungsgefäßes angeordnet ist, ist kein anspruchsgemäßes Zerkleinerungswerkzeug. Durch Drehen eines Misch- oder Schneidwerkzeugs beim Grund eines Gefäßes kann Speise auch entgegengesetzt zur Schwerkraft gefördert und danach erneut zerkleinert werden. Ein solches Schneidwerkzeug ist daher dazu bestimmt und geeignet, dass eine Speise das Schneidwerkzeug mehrmals passiert, um zerkleinert zu werden.

Insbesondere weist das Zerkleinerungswerkzeug einen Abstand von mindestens 10 cm, insbesondere mindestens 15 cm, von einem Boden des Auffangkorbs auf. Gemessen wird der Abstand zwischen dem tiefsten Punkt des Bodens und dem tiefsten Punkt des Zerkleinerungswerkzeugs. Zerkleinerte Speisen bzw. Zutaten fallen somit wenigstens 10 cm herab.

Der Auffangkorb kann als Aufsatz zur Anordnung in dem Speisenzubereitungsgefäß eingerichtet sein. Dies meint, dass es von oben in bzw. auf dem Speisenzubereitungsgefäß positioniert und ggf. arretiert werden kann. Dies geschieht in der Regel manuell. Mit anderen Worten ist der Auffangkorb lösbar und zwar in der Regel manuell lösbar. Der Auffangkorb ist insbesondere reversibel an bzw. auf dem Speisenzubereitungsgefäß anbringbar. Der Auffangkorb kann ein Aufsatz in der Art eines Deckels für das Speisenzubereitungsgefäß sein. In dieser Ausführungsform können zerkleinerte Speisen in dem Auffangkorb gesammelt werden, das im bzw. oberhalb des Speisenzubereitungsgefäßes angeordnet ist. Der Auffangkorb kann eine mittig und/oder senkrecht verlaufende Öffnung aufweisen, durch welche eine Antriebswelle des Speisenzubereitungsgeräts hindurch verlaufen kann, um das Zerkleinerungswerkzeug anzutreiben. Das Speisenzubereitungsgerät kann so ausgestaltet sein, dass im derart positionierten Zustand des Auffangkorbs eine Welle durch das Speisenzubereitungsgefäß hindurch verläuft, um mittels einem unterhalb des Speisenzubereitungsgefäßes befindlichen Motors das Zerkleinerungswerkzeug anzutreiben. Die Welle kann mehrteilig sein und Kupplungselemente umfassen, um die verschiedenen Abschnitte der Welle miteinander zu verbinden.

So kann in einer vorteilhaften Ausgestaltung ein Abschnitt der Welle das Mischwerkzeug mit dem Zerkleinerungswerkzeug drehfest verbinden. Ein Drehen des Mischwerkzeugs hat dann zur Folge, dass das Zerkleinerungswerkzeug mit gleicher Drehzahl gedreht wird. Dieser Abschnitt der Welle kann insbesondere von dem Mischwerkzeug gelöst werden, um das Speisenzubereitungsgerät mit dem darin befindlichen Mischwerkzeug unabhängig vom Zerkleinerungswerkzeug mit dem zugehörigen Abschnitt der Welle und dem Auffangkorb nutzen zu können. Das Zerkleinerungswerkzeug kann fest mit dem Abschnitt der Welle verbunden sein. Es ist aber auch möglich, dass das Zerkleinerungswerkzeug lösbar mit dem genannten Abschnitt der Welle verbunden ist, um eine Aufbewahrung und eine Reinigung zu erleichtern.

Das Speisenzubereitungsgefäß kann auch so beschaffen sein, dass das Zerkleinerungswerkzeug auch unabhängig von dem Auffangkorb für ein Zerkleinern eingesetzt werden kann. Durch das Zerkleinerungswerkzeug zerkleinerte Zutaten einer Speise werden dann durch das Speisenzubereitungsgefäß des Speisenzubereitungsgerätes aufgefangen. Auch in diesem Fall ist das Zerkleinerungswerkzeug oberhalb eines Bodens zum Auffangen der zerkleinerten Speisen angeordnet, sodass diese schwerkraftbedingt nach unten fallen und dort aufgefangen werden können. Typischerweise ist das Zerkleinerungswerkzeug hierbei in einem Gehäuseteil angeordnet, der mantelförmig ausgestaltet ist bzw. einen im Wesentlichen kreisringförmigen Querschnitt aufweist, sodass zerkleinerte Speisen durch das Gehäuseteil hindurch schwerkraftbedingt unmittelbar in das Speisenzubereitungsgefäß gelangen und dort aufgefangen werden. Dieses Gehäuseteil kann wie oben beschrieben als Aufsatz zur Anordnung im Speisenzubereitungsgefäß ausgestaltet sein. Insofern wird auf die obigen Ausführungen verwiesen. Hierbei ist es möglich, die Speisen unmittelbar weiterzuverarbeiten. Indem eine hinreichend geringe Drehzahl eingestellt ist, kann vermieden werden, dass das Mischwerkzeug die bereits durch das Zerkleinerungswerkzeug zerkleinerten Zutaten oder die zerkleinerte Speise weiter zerkleinert. Die geringe Drehzahl kann beispielsweise weniger als 2000 Umdrehungen pro Minute betragen oder aber weniger als 1000 Umdrehungen pro Minute, um ein weiteres Zerkleinern durch das Mischwerkzeug dann zu vermeiden. Ein solches unerwünschtes weiteres Zerkleinern von Zutaten oder Speise kann vor allem dadurch vermieden werden, in dem dann das Mischwerkzeug in Richtung einer stumpfen Kante von ein oder mehreren Klingen des Mischwerkzeugs gedreht wird und damit entgegengesetzt zur Schneidrichtung. Das Speisenzubereitungsgerät kann also so eingerichtet sein, dass das Zerkleinerungswerkzeug in seiner Schneidrichtung gedreht wird und dabei gleichzeitig das Mischwerkzeug entgegengesetzt zu seiner Schneidrichtung. Das Zerkleinerungswerkzeug zerschneidet dann Zutaten einer Speise oder eine Speise in gewünschter und definierter Weise. Das Mischwerkzeug ist dann aufgrund der Drehrichtung entgegengesetzt zur Schneidrichtung und/oder aufgrund einer zu geringen Drehzahl nicht in der Lage, die bereits zerkleinerten Zutaten einer Speise oder die bereits zerkleinerte Speise weiter zu zerkleinern oder zumindest nicht im nennenswerten Umfang weiter zu zerkleinern.

Das Zerkleinerungswerkzeug weist insbesondere mindestens eine Schneide zum Zerkleinern auf, beispielsweise durch ein oder mehrere Schneiden und/oder Reiben. Das Zerkleinerungswerkzeug kann eine Schneidscheibe bzw. Reibscheibe sein. Es kann längliche, im Wesentlichen radial angeordnete Klingen zum Schneiden von Scheiben, beispielsweise von Kartoffeln aufweisen. Es kann alternativ oder zusätzlich lokal begrenzte und mit einer Klinge versehene Vertiefungen bzw. Mulden, beispielsweise zum Reiben von Gemüse, aufweisen. Dabei kann die Funktion abhängig von der Drehrichtung der Schneidscheibe sein. In einer Drehrichtung der Schneidscheibe werden beispielsweise Streifen geschnitten und in der entgegengesetzten Richtung Scheiben.

Das Zerkleinerungswerkzeug kann Teil eines Zerkleinerungsaufsatzes sein.

Die Steuerungseinheit kann in einer Ausgestaltung dazu eingerichtet sein, unter Berücksichtigung einer bereitgestellten Information einen Soll-Parameter eines Zerkleinerungsprozesses einer Speise mittels des Zerkleinerungswerkzeugs festzulegen. Die bereitgestellte Information kann aus einem Messwert resultieren oder einem Rezept entnommen werden, auf welches die Steuerungseinheit zugreifen kann. Ein Soll-Parameter eines Zerkleinerungsprozesses kann beispielsweise die Drehzahl des Zerkleinerungswerkzeugs sein.

Die Steuerungseinheit ermöglicht durch die Festlegung des Soll-Parameters eine Vorgabe von relevanten Informationen für den aktuellen Zerkleinerungsprozess durch das Zerkleinerungswerkzeug. Diese sind nutzbar, um jeden Zerkleinerungsprozess individuell an die konkreten Gegebenheiten anzupassen. Auf diese Weise wird ein besonders gutes und reproduzierbares Zerkleinerungsergebnis erzielt. Konkrete Eigenschaften der zu zerkleinernden Speise bzw. Zutat, auch als Schnittgut bezeichnet, finden Berücksichtigung. Die Abhängigkeit des Zerkleinerungsergebnisses von äußeren Einflüssen bzw. Fehlerquellen wie beispielsweise dem Verhalten des Benutzers und der Beschaffenheit des Schnittgutes kann minimiert werden. Die Benutzerfreundlichkeit wird weiter erhöht.

In einer weiteren Ausgestaltung ist die Steuerungseinheit mit einer Datenbank verbunden oder verbindbar und dazu eingerichtet, zur Festlegung des Soll-Parameters zusätzlich zur bereitgestellten Information einen Inhalt der Datenbank zu berücksichtigen. Beispielsweise umfasst die Datenbank in einem einfachen Fall verschiedene Speisen und diesen zugeordnet jeweils eine geeignete Drehzahl für das Zerkleinerungswerkzeug zum Zerkleinern der Speise. Basierend auf der bereitgestellten Information betreffend die Art der zu zerkleinernden Speise sowie der Datenbank kann die Steuerungseinheit nun einen Soll-Parameter wie beispielsweise eine Soll-Drehzahl festlegen. Grundsätzlich wird dann während des Betriebs das Zerkleinerungswerkzeug mit dieser Soll-Drehzahl gedreht. Die Drehzahl des Zerkleinerungswerkzeugs kann aber beispielsweise bei Auftreten eines übermäßig hohen Widerstands dann geringer sein. Die Datenbank kann eine interne Datenbank sein, die in einer Speichereinheit des Speisenzubereitungsgeräts bzw. der Steuerungseinheit gespeichert ist. Alternativ kann die Datenbank eine externe Datenbank sein, auf welche die Steuerungseinheit über ein Datennetzwerk wie beispielsweise das Internet zugreifen kann. Diese Ausgestaltung ermöglicht ein noch besseres und reproduzierbares Zerkleinerungsergebnis.

In einer weiteren Ausgestaltung weist das Speisenzubereitungsgerät wenigstens einen Sensor auf. Die Steuerungseinheit ist dazu eingerichtet, unter Berücksichtigung eines Sensorsignals des Sensors den Soll-Parameter festzulegen. Der Sensor stellt der Steuerungseinheit ein Sensorsignal bereit. Dieses dient insbesondere als Information, die bereitgestellt wird. Der Sensor kann der Erfassung eines Sensorsignals bezüglich einer Eigenschaft der Speise und/oder eines Teils des Speisenzubereitungsgeräts dienen. Ein Sensorsignal kann ein insbesondere analoges Signal sein, dessen Spannung, Stromstärke und/oder Frequenz mit der gemessenen Größe korreliert. Beispielsweise kann die Steuerungseinheit basierend auf einem Sensorsignal eines Kraftsensors eine Soll-Drehzahl festlegen. Diese Ausgestaltung ermöglicht durch die Erfassung eines Sensorsignals ein besonders reproduzierbares Zerkleinerungsergebnis unter Berücksichtigung gemessener Eigenschaften.

Insbesondere umfasst das Speisenzubereitungsgerät und zwar vorzugsweise das Basisteil eine Eingabeeinrichtung und/oder eine Ausgabeeinrichtung. Diese können gemeinsam als Ein- und Ausgabeeinrichtung ausgeführt sein, beispielsweise als Touchscreen.

In einer weiteren Ausgestaltung ist die Steuerungseinheit dazu eingerichtet, über eine Ausgabeeinrichtung Führungsinformationen an einen Benutzer auszugeben. Die Führungsinformationen dienen dazu, den Benutzer durch einzelne Vorbereitungsund/oder Arbeitsschritte eines Speisenzubereitungsprozesses zu führen. Die Steuerungseinheit kann ferner dazu eingerichtet sein, über eine Eingabeeinrichtung Eingaben oder Befehle des Benutzers zu empfangen, beispielsweise die Bestätigung, dass eine bestimmte Menge einer Zutat hinzugefügt wurde, und die Führung durch den Speisenzubereitungsprozess entsprechend zu gestalten.

In einer weiteren Ausgestaltung ist das Zerkleinerungswerkzeug drehbar in einem Gehäuseteil angeordnet. Das Speisenzubereitungsgerät kann einen Deckel zum Abdecken des Gehäuseteils mit einer Öffnung zum Einführen zu zerkleinernder Speisen aufweisen. Das Zerkleinerungswerkzeug kann so angeordnet oder anordbar sein, dass durch die Öffnung eingeführte Speisen nach Passage des Zerkleinerungswerkzeugs in dem Auffangkorb aufgefangen werden. Entsprechendes gilt auch hier wie an anderer Stelle der Beschreibung für Zutaten einer Speise.

Die Passage des Zerkleinerungswerkzeugs meint bei rotierendem Zerkleinerungswerkzeug insbesondere die Zerkleinerung durch das Zerkleinerungswerkzeug. Insbesondere ist das Zerkleinerungswerkzeug in einer Zerkleinerungswerkzeugebene angeordnet bzw. anordbar und die Passage des Zerkleinerungswerkzeugs meint die Passage der Zerkleinerungswerkzeugebene durch die Speise. Die Öffnung weist insbesondere die Form eines Stutzens auf. Sie kann durch einen Stößel verschließbar sein, der zum Hineindrücken der Speise ausgestaltet ist. Das Zerkleinerungswerkzeug kann beispielsweise eine Schneidscheibe sein.

Das Zerkleinerungswerkzeug ist in dem Gehäuseteil drehbar. Das Gehäuseteil dient der Einhausung des Zerkleinerungswerkzeugs. Insbesondere umfasst das Speisenzubereitungsgerät das Gehäuseteil. Das Zerkleinerungswerkzeug ist innerhalb des Gehäuseteils angeordnet oder anordbar. Das Gehäuseteil muss nicht vollständig verschlossen sein. Das Gehäuseteil kann Teil des Auffangkorbs sein, beispielsweise dessen oberer Rand.

Das Speisenzubereitungsgefäß kann so beschaffen sein, dass es erkennt, ob der Auffangkorb in das Speisenzubereitungsgefäß eingesetzt ist oder nicht. So kann ein Schalter vorhanden sein, der betätigt wird, wenn der Auffangkorb in das Speisenzubereitungsgefäß eingesetzt ist. Durch die Betätigung erhält dann die Steuerungseinheit die Information, dass der Auffangkorb in das Speisenzubereitungsgefäß eingesetzt ist. Alternativ kann ein Sensor vorhanden sein, der erkennen kann, wenn der Auffangkorb in das Speisenzubereitungsgefäß eingesetzt ist. Ein Benutzer kann durch eine Information über das Display dazu aufgefordert werden, den Auffangkorb einzusetzen. Eine solche Aufforderung an den Benutzer kann in einer Ausgestaltung unterbleiben, wenn die Steuerungseinheit weiß, dass der Auffangkorb in das Speisenzubereitungsgefäß bereits eingesetzt ist.

Die Steuerungseinheit kann so beschaffen sein, dass die maximal einstellbare Drehzahl verringert wird, wenn der Auffangkorb in das Speisenzubereitungsgefäß eingesetzt ist. Das Speisenzubereitungsgerät ist dann so eingerichtet, dass die maximal mögliche Drehzahl für das Mischwerkzeug größer ist als für das Zerkleinerungswerkzeug.

Ein weiterer Aspekt der Erfindung ist ein Verfahren zum Zerkleinern einer Speise unter Nutzung eines erfindungsgemäßen Speisenzubereitungsgeräts. Das Zerkleinerungswerkzeug ist relativ zu einem Auffangkorb derart angeordnet oder anordbar, dass eine Speise nach der Zerkleinerung mittels des Zerkleinerungswerkzeugs schwerkraftbedingt nach unten fällt, um im Auffangkorb aufgefangen zu werden. Das Zerkleinern erfolgt verfahrensgemäß immer mit einer geringeren Geschwindigkeit als die maximal mögliche Drehgeschwindigkeit, mit der das Mischwerkzeug gedreht werden kann. Dies kann dadurch erreicht werden, weil das Speisenzubereitungsgefäß so eingerichtet ist. Dies kann dadurch erreicht werden, indem der Benutzer durch das Speisenzubereitungsgerät angeleitet wird, immer nur geringere Drehzahlen für das Zerkleinerungswerkzeug einzustellen im Vergleich zur maximal möglichen Drehzahl des Mischwerkzeugs. Dies kann durch Rezepte erreicht werden, die die Steuerungseinheit veranlassen, immer nur geringere Drehzahlen für das Zerkleinerungswerkzeug einzustellen im Vergleich zur maximal möglichen Drehzahl des Mischwerkzeugs. Vorzugsweise beträgt die maximal vorgesehene Drehzahl für das Zerkleinerungswerkzeug weniger als 2000 Umdrehungen pro Minute, besonders bevorzugt weniger als 1500 Umdrehungen pro Minute. Vorzugsweise ist die maximale Drehgeschwindigkeit für das Zerkleinerungswerkzeug wenigstens fünfmal geringer als die maximale Drehgeschwindigkeit für das Mischwerkzeug. Beträgt also die maximal mögliche Drehgeschwindigkeit für das Mischwerkzeug 5000 Umdrehungen pro Minute, dann beträgt die maximale Geschwindigkeit für das Zerkleinerungswerkzeug 1000 Umdrehungen pro Minute.

Mittels einer Steuerungseinheit kann unter Berücksichtigung einer bereitgestellten Information ein Soll-Parameter eines Zerkleinerungsprozesses einer Speise mittels des Zerkleinerungswerkzeugs festgelegt werden.

Das Verfahren erfolgt unter Nutzung des erfindungsgemäßen Speisenzubereitungsgeräts. Die Merkmale, Ausführungsformen und Wirkungen des eingangs beschriebenen Speisenzubereitungsgeräts zur Lösung der Aufgabe beziehen sich entsprechend auch auf das Verfahren und seine Ausgestaltungen. Das Verfahren umfasst insbesondere ferner die Ausgabe einer Ausgabeinformation beispielsweise bezüglich des Soll-Parameters an einen Benutzer mittels einer Ausgabeeinrichtung und/oder die Beeinflussung einer Drehung des Zerkleinerungswerkzeugs auf Basis des Soll-Parameters durch die Steuerungseinheit. Das Verfahren kann die Regelung der Drehung des Zerkleinerungswerkzeugs auf Basis des Soll-Parameters durch die Steuereinheit umfassen.

Ein weiterer Aspekt der Erfindung ist ein Computerprogrammprodukt. Dieses umfasst Befehle, die bei einer Ausführung des Programms durch einen Computer diesen veranlassen, die Schritte des Verfahrens nach dem vorhergehenden Anspruch auszuführen. Der Computer ist insbesondere eine Steuerungseinheit eines Speisenzubereitungsgeräts. Die Merkmale, Ausführungsformen und Wirkungen des eingangs beschriebenen Geräts sowie des Verfahrens zur Lösung der Aufgabe beziehen sich entsprechend auch auf dieses Computerprogrammprodukt.

Ein weiterer Aspekt der Erfindung ist ein Speisenzubereitungsgerät mit einem in einem Gehäuseteil drehbaren Zerkleinerungswerkzeug zum Zerkleinern von Speisen, einer Steuerungseinrichtung und einem Sensor zur Erfassung einer auf einen Teil des Speisenzubereitungsgeräts ausgeübten Druckkraft und/oder eines Gewichts einer zerkleinerten Speise. Die Steuerungseinrichtung ist dazu eingerichtet, basierend auf dem Sensorsignal einen Füllstand in einem Auffangkorb oder einem Speisenzubereitungsgefäß zu ermitteln. Die Steuerungseinrichtung kann eine Steuerungseinheit gemäß den weiteren Aspekten der Erfindung sein. Die Merkmale, Ausführungsformen und Wirkungen des eingangs beschriebenen Geräts zur Lösung der Aufgabe beziehen sich entsprechend auch auf diesen Aspekt.

Ein weiterer Aspekt der Erfindung ist ein Speisenzubereitungsgerät mit einem Speisenzubereitungsgefäß, einem Heizelement zum Erhitzen einer Speise in dem Speisenzubereitungsgefäß, einem Mischwerkzeug zum Mischen und/oder Zerkleinern einer Speise in einem Bodenbereich des Speisenzubereitungsgefäßes, einer Antriebswelle zum Drehen des Mischwerkzeugs und einem Elektromotor zum Antrieb der Antriebswelle. Das Speisenzubereitungsgerät weist ferner einen Zerkleinerungsaufsatz mit einem drehbaren Zerkleinerungswerkzeug zum Zerkleinern von Speisen auf. Der Zerkleinerungsaufsatz kann manuell lösbar an bzw. auf dem Speisenzubereitungsgefäß angebracht werden. Vorzugsweise weist das Speisenzubereitungsgerät einen Adapter auf, der zur drehfesten Verbindung des Zerkleinerungswerkzeugs mit der Antriebswelle oder zumindest einem Teil des Mischwerkzeugs eingerichtet ist, sodass der Elektromotor das Zerkleinerungswerkzeug des Zerkleinerungsaufsatzes für ein Drehen antreibt.

Der Zerkleinerungsaufsatz ist insbesondere so ausgestaltet, dass das Zerkleinerungswerkzeug relativ zu einem Auffangkorb derart angeordnet oder anordbar ist, dass eine Speise nach der Zerkleinerung mittels des Zerkleinerungswerkzeugs schwerkraftbedingt nach unten fällt, um im Auffangkorb aufgefangen zu werden. Die Merkmale, Ausführungsformen und Wirkungen des eingangs beschriebenen Geräts zur Lösung der Aufgabe beziehen sich entsprechend auch auf diesen Aspekt.

Ein weiterer Aspekt ist die Verwendung eines Zerkleinerungsaufsatzes zum manuell lösbaren Anbringen an oder auf einem Speisenzubereitungsgefäß eines Speisenzubereitungsgeräts. Der Zerkleinerungsaufsatz umfasst ein drehbares Zerkleinerungswerkzeug zum Zerkleinern von Speisen. Das Zerkleinerungswerkzeug ist relativ zu einem Auffangkorb derart angeordnet oder anordbar, dass eine Speise nach Zerkleinerung mittels des Zerkleinerungswerkzeugs schwerkraftbedingt nach unten fällt, um im Auffangkorb aufgefangen zu werden. Das Speisenzubereitungsgerät umfasst zumindest eines der folgenden Merkmale: das Speisenzubereitungsgefäß, ein Heizelement zum Erhitzen einer Speise in dem Speisenzubereitungsgefäß, ein Mischwerkzeug zum Mischen und/oder Zerkleinern einer Speise in einem Bodenbereich des Speisenzubereitungsgefäßes, eine Antriebswelle zum Drehen des Mischwerkzeugs, einen Elektromotor zum Antrieb der Antriebswelle.

Das manuell lösbare Anbringen ist insbesondere ein manuelles, reversibles Verbinden, wobei die Verbindung manuell gelöst werden kann. Der Auffangkorb kann das Speisenzubereitungsgefäß oder ein separates Gefäß sein.

### Die Erfindung betrifft also auch:

Verwendung eines Zerkleinerungsaufsatzes zum manuell lösbaren Anbringen an oder auf einem Speisenzubereitungsgefäß eines Speisenzubereitungsgeräts, wobei der Zerkleinerungsaufsatz ein drehbares Zerkleinerungswerkzeug zum Zerkleinern von Speisen umfasst, wobei das Zerkleinerungswerkzeug relativ zu einem Auffangkorb derart angeordnet oder anordbar ist, dass eine Speise nach der Zerkleinerung mittels des Zerkleinerungswerkzeugs schwerkraftbedingt nach unten fällt, um im Auffangkorb aufgefangen zu werden, wobei das Speisenzubereitungsgerät ein Heizelement zum Erhitzen einer Speise in dem Speisenzubereitungsgefäß, ein Mischwerkzeug zum Mischen und/oder Zerkleinern einer Speise in einem Bodenbereich des Speisenzubereitungsgefäßes, eine Antriebswelle zum Drehen des Mischwerkzeugs und einen Elektromotor zum Antrieb der Antriebswelle umfasst.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: schematische Explosionszeichnung eines Zerkleinerungsaufsatzes;
- Figur 2:: Schnitt durch Zerkleinerungsaufsatz;
- Figur 3:: Schnitt durch Speisenzubereitungsgefäß mit eingesetztem Zerkleinerungsaufsatz;
- Figur 4:: Schnitt durch Speisenzubereitungsgefäß;
- Figur 5:: Speisenzubereitungsgerät
- Figur 6:: Mischwerkzeug.

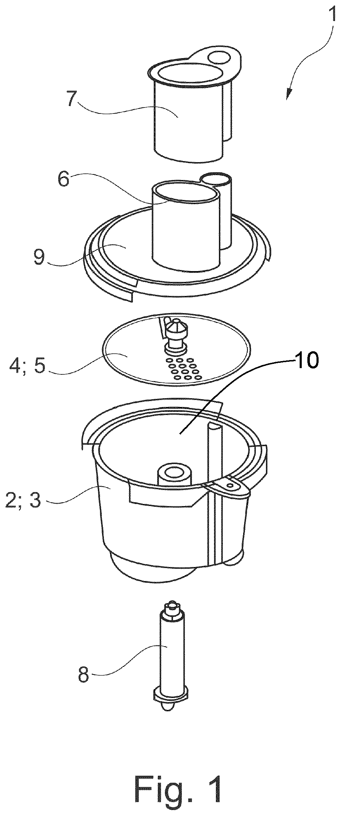

Die Figur 1 zeigt eine schematische Darstellung eines Zerkleinerungsaufsatzes 1 als Teil eines erfindungsgemäßen Speisenzubereitungsgeräts. Im unteren Bereich ist ein Adapter 8 dargestellt, durch den eine drehfeste Verbindung zwischen dem Zerkleinerungswerkzeug 4 und einer Welle eines Elektromotors oder mit zumindest einem Teil des Mischwerkzeugs hergestellt wird. Der Adapter 8 kann daher als Teil bzw. Abschnitt einer Welle angesehen werden. Durch den Elektromotor, der das Mischwerkzeug des Speisenzubereitungsgeräts antreibt, kann so auch das Zerkleinerungswerkzeug 4 angetrieben und damit gedreht werden. Das Zerkleinerungswerkzeug 4 ist eine Schneidscheibe 5.

Der Adapter 8 kann zum Beispiel mit ein oder mehreren Klingen eines Mischwerkzeugs gekoppelt werden, um den Adapter 8 mit dem Mischwerkzeug drehfest zu verbinden. Eine feste Verbindung in axialer Richtung ist zwischen Adapter und Mischwerkzeug nicht erforderlich und auch nicht sinnvoll. Es genügt dann nämlich, den Adapter 8 auf das Mischwerkzeug aufzusetzen, was die Handhabung erleichtert. Umgekehrt ist es dann sehr einfach, den Zerkleinerungsaufsatz bei Bedarf wieder zu entfernen.

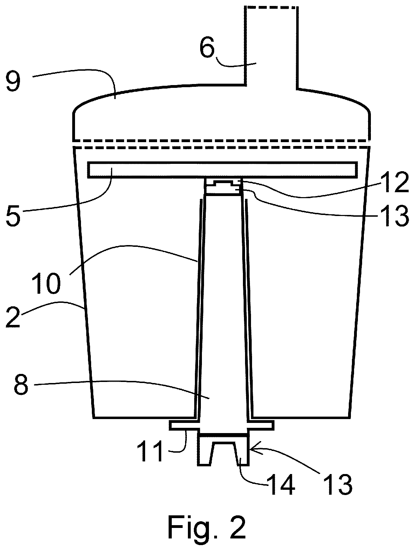

Der Adapter 8 verläuft im betriebsbereiten Zustand durch eine Führung 10 (siehe auch Figur 2) im Inneren des Auffangkorbs 2. Der Adapter 8 ist mit der Schneidscheibe 5 lösbar verbindbar. Der Auffangkorb 2 dient dem Auffangen geschnittener Speisen. Der Auffangkorb 2 ist als Aufsatz zur Anordnung in einem Speisenzubereitungsgefäß des Speisenzubereitungsgeräts 1 ausgestaltet. Der obere Bereich des Auffangkorbs 2 dient als Gehäuseteil 3 zur Einhausung der Schneidscheibe 5. Ein lösbarer Deckel 9 deckt den Auffangkorb 2 ab und deckt die Schneidscheibe 5 gegenüber der Umgebung ab. Im Deckel 9 befinden sich zwei nebeneinander angeordnete, unterschiedliche große Öffnungen 6, die als Stutzen zum Einführen von zu zerkleinernden Speisen ausgestaltet sind. Zugehörige und entsprechend dimensionierte, miteinander verbundene Stößel 7 dienen dem Hineindrücken der Speisen nach unten auf die Schneidscheibe 5. Der Deckel 9 kann beispielsweise durch eine Schraubverbindung mit dem Auffangkorb 2 verbunden werden. Es ist aber auch eine Rastverbindung möglich, die den Deckel 9 mit dem Auffangkorb 2 verbinden kann. Der Deckel 9 kann ein oder mehrere Griffe umfassen. Die ein oder mehreren Griffe können seitlich abstehen. Die ein oder mehreren Griffe können nach oben abstehen.

Die beiden Stößel 7 müssen nicht miteinander verbunden sein, was aber die Handhabung erschwert. Es können auch nur eine Öffnung 6 und nur ein Stößel 7 vorhanden sein. Ein Stößel 7 kann zugleich als Gefäß ausgebildet sein, so zum Beispiel als Messbecher. Ein oder zwei miteinander verbundene Stößel 7 können außerdem ein Teil eines zweiteiligen Deckels sein, mit dem das Speisenzubereitungsgefäß des Küchengeräts verschlossen werden kann. Dadurch kann die Zahl der Teile geringgehalten werden.

Die Figur 2 zeigt schematisch einen Querschnitt durch einen Zerkleinerungsaufsatz. Gezeigt wird, dass der Auffangkorb 2 eine sich zur Korböffnung hin konisch verjüngende Führung 10 für den Adapter 8 der Welle aufweist. Der Adapter 8 verjüngt sich ebenfalls entsprechend konisch nach oben zur Korböffnung hin. Der konische Verlauf erleichtert das Einfädeln des Adapters 8 in die Führung 10 hinein. Der Adapter 8 weist an seiner Unterseite einen Anschlag 11 auf, der zum Beispiel wie ein Flansch geformt sein kann. Der Anschlag 11 begrenzt das Hineinstecken des Adapters 8 in die Führung 10 hinein. Der Auffangkorb 2 kann an seinem oberen Ende zum Beispiel ein oder zwei Griffe umfassen. Griffe am oberen Ende können seitlich abstehen.

Die Schneidscheibe 5 umfasst ein Kupplungselement 12 und der Adapter 8 umfasst ein dazu passendes Kupplungselement 13. Durch die beiden Kupplungselemente 12 und 13 werden Adapter 8 und Schneidscheibe 5 sowohl drehfest als auch in axialer Richtung miteinander verbunden. Es kann eine drehfeste Verbindung in nur einer Schneidrichtung der Schneidscheibe 5 genügen. Ein Drehen in die entgegengesetzte Richtung kann dann bewirken, dass die beiden Kupplungselemente 12 und 13 voneinander gelöst werden, um die Schneidscheibe 5 von dem Adapter 8 trennen zu können.

Es ist aber auch möglich, dass die beiden Kupplungselemente 12 und 13 beispielsweise durch eine Rastverbindung miteinander fest verbunden werden können und damit in beide Drehrichtungen drehfest miteinander verbunden sind. Diese Ausführungsform ist dann von besonderem Vorteil, wenn durch Auswahl der Drehrichtung das Ergebnis der Zerkleinerung geändert werden kann.

Der Adapter kann an seiner Unterseite ein Kupplungselement 13 mit nach unten abstehenden Armen 14 aufweisen. Zwei Arme 14 können eine Klinge des Mischwerkzeugs umgreifen, umso die drehfeste Verbindung zwischen Mischwerkzeug und Adapter 8 herzustellen. Die beiden Arme 14 können sich wie in Figur 2 gezeigt zur Unterseite hin verjüngen, um das Verbinden mit einer Klinge eines Mischwerkzeugs zu erleichtern. Das Kupplungselement 14 kann an der Unterseite auch anders beschaffen sein, um den Adapter 8 mit dem Mischwerkzeug drehfest zu verbinden.

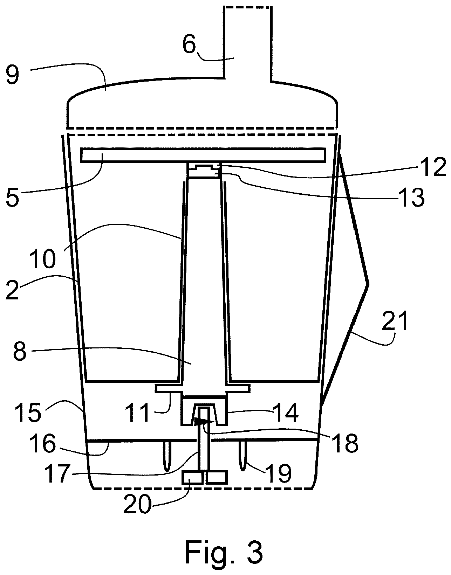

In der Figur 3 wird schematisch in einer Schnittdarstellung gezeigt, wie der Auffangkorb 2 nebst den weiteren in der Figur 2 gezeigten Komponenten in ein Speisenzubereitungsgefäß 15 eingesetzt sein kann. Das Speisenzubereitungsgefäß 15 umfasst einen Boden 16. Eine Welle 17 ist durch den Boden 16 hindurchgeführt. In der Figur 3 wird eine Klinge 18 dargestellt, die seitlich von der Welle 17 absteht. Zu beiden Seiten der Klinge 18 befinden sich Arme 14 des Kupplungselements 13 . Dadurch kann eine Drehbewegung der Welle 17 auf den Adapter 8 übertragen werden. Die Figur 3 verdeutlicht, dass die Klinge 18 eine spitz zulaufende Schneidkante und eine gegenüberliegende stumpfe Kante aufweist. In der Regel gibt es allerdings mehr als nur eine von der Welle 17 seitlich abstehende Klinge 17, so zum Beispiel vier Klingen 18. Ein Arm 14 kann dann zwischen zwei Klingen 18 hineinreichen, um eine drehfeste Verbindung herzustellen. Aus Stabilitätsgründen gibt es dann grundsätzlich einen zweiten Arm 14 der zwischen zwei andere Klingen 18 hineinreichen kann. Damit Arme 14 zwischen Klingen 18 sein können, sind die Arme 14 außermittig angeordnet. Mit außermittig ist eine Anordnung gemeint, die einen Abstand zu der Drehachse aufweist, um die herum der Adapter 8 gedreht werden kann.

Es können zum Beispiel 2 bis 5 solcher Klingen 18 von der Welle 17 seitlich abstehen und wie dargestellt nahe beim Boden 16 angeordnet sein. Die ein oder mehreren Klingen 18 bilden zusammen mit der Welle 17 ein Mischwerkzeug, welches eine Speise oder ein oder mehrere Zutaten einer Speise beim Grund des Speisenzubereitungsgefäßes 15 und damit beim Boden 16 mischen und zerkleinern können.

In den Boden 16 können ein oder mehrere Heizleiter integriert sein. Die Unterseite des Bodens 16 kann nach unten abstehende elektrische Stecker 19 aufweisen, über die die Heizleiter mit Strom versorgt werden können.

Im aufgestellten Zustand des Speisenzubereitungsgefäßes 15 weist der Boden 16 wie in der Figur 3 gezeigt einen Abstand zur Unterseite auf. Der Boden ist mit der Mantelfläche des Speisenzubereitungsgefäßes 15 entsprechend verbunden. Dadurch wird es möglich, dass die Stecker 19 und die Welle 17 auch nach unten vom Boden 16 aus gesehen abstehen können, ohne selber auf einem Untergrund aufzusetzen.

Das untere Ende der Welle 17 kann ein Kupplungselement 20 aufweisen, welches mit einem dazu passenden Kupplungselement der Welle des Elektromotors des zugehörigen Speisenzubereitungsgeräts drehfest verbunden werden kann. Eine axiale feste Verbindung ist nicht erforderlich und auch nicht erwünscht, um das Kuppeln zu beschleunigen. Das Speisenzubereitungsgefäß 15 kann dann in einer Aufnahme des übrigen Teils des Speisenzubereitungsgeräts eingesetzt werden und auch wieder daraus entfernt werden. In die Aufnahme reicht dann von unten kommend geeignet weit die Welle des Elektromotors hinein und außerdem elektrische Buchsen, die mit den Steckern 19 elektrisch verbunden werden können, indem das Speisenzubereitungsgefäß in die Aufnahme eingesetzt wird.

Das Speisenzubereitungsgefäß 15 kann einen seitlich abstehenden Griff 21 umfassen. Der Auffangkorb 2 umfasst keinen solchen Griff, der seitlich absteht, da der Auffangkorb 2 andernfalls nicht in das Speisenzubereitungsgefäß 15 eingesetzt werden könnte. Der Auffangkorb 2 kann an seinem oberen Ende Griffe aufweisen, die am Übergang von Deckel 9 und Speisenzubereitungsgefäß 15 herausragen, wenn der Deckel 9 den Auffangkorb 2 verschließt und der Auffangkorb in das Speisenzubereitungsgefäß 15 eingesetzt ist.

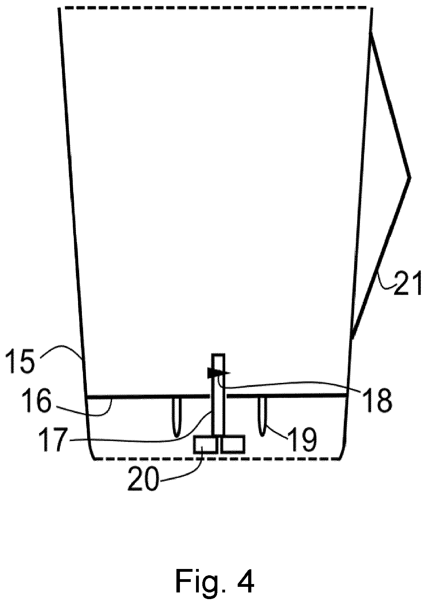

In der Figur 4 wird schematisch nur das Speisenzubereitungsgefäß 15 aus Figur 3 gezeigt, also ohne den darin eingesetzten Auffangkorb nebst den weiteren in der Figur 2 gezeigten Komponenten. Das Speisenzubereitungsgefäß 15 verjüngt sich leicht nach unten hin, um leicht in eine Aufnahme eines Basisteils eingesetzt werden zu können.

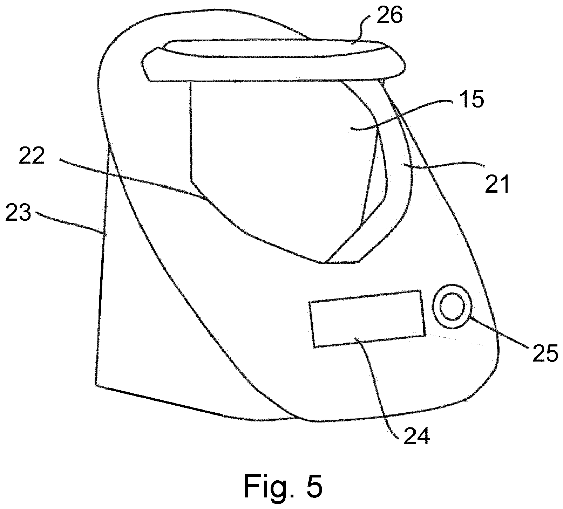

In der Figur 5 ist ein Speisenzubereitungsgefäß 15 gezeigt, welches in eine Aufnahme 22 eines anderen Teils 23 eines Speisenzubereitungsgeräts eingesetzt ist. Der andere Teil 23 wird Basisteil genannt. Das Basisteil 23 umfasst ein berührungsempfindliches Display 24 und einen Drehregler 25. Beispielsweise durch den Drehregler 25 kann eine Drehzahl für das Mischwerkzeug und damit auch für das Zerkleinerungswerkzeug eingestellt werden. Beispielsweise über das Display 24 können ausgewählte Drehzahlen oder ausgewählte Drehzahlstufen angezeigt werden. Alternativ oder ergänzend kann das berührungsempfindlicher Display 24 zur Eingabe von Drehzahlen oder Drehzahlstufen eingerichtet sein.

In dem Basisteil 23 befindet sich eine Steuerungseinheit, ein Elektromotor, eine Welle des Elektromotors sowie eine Stromversorgung für die Heizleiter des Speisenzubereitungsgefäßes 15. Das Basisteil 23 umfasst einen elektrischen Stecker, der über ein elektrisches Kabel das Basisteil 23 mit Strom versorgen kann, wenn der elektrische Stecker in eine dafür geeignete externe elektrische Steckdose eines Haushalts gesteckt wird.

Mit einem Deckel 26 kann das Speisenzubereitungsgefäß 15 verschlossen werden, wenn der Auffangkorb nicht eingesetzt ist. Der Deckel 26 kann durch das Basisteil 23 so verriegelt werden, dass der Deckel 26 dann nicht mehr vom Speisenzubereitungsgefäß 15 entfernt werden kann. Der Deckel 26 kann zweiteilig sein. Das eine Teil weist beispielsweise eine kleine Öffnung auf, die mit dem zweiten Teil des Deckels 26 verschlossen werden kann. Der Deckel 26 kann einen umlaufenden Rand umfassen, durch den erreicht wird, dass Flüssigkeit auf dem Deckel nicht nach außen vom Deckel wegfließen kann.

Das Speisenzubereitungsgefäß 15 kann nach oben aus der Aufnahme 22 herausgenommen werden. Das Speisenzubereitungsgefäß 15 und der Auffangkorb 2 können im Schnitt derart kreisrund sein, dass der Auffangkorb 2 in das Speisenzubereitungsgefäß 15 eingesetzt werden kann, ohne den Auffangkorb 2 dafür ausrichten zu müssen. Der Auffangkorb 2 wird dann zuverlässig durch das Speisenzubereitungsgefäß 15 gehalten.

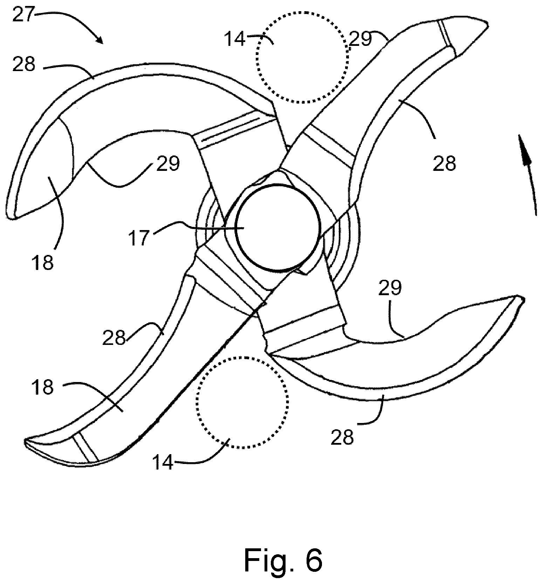

Die Figur 6 zeigt eine Aufsicht auf ein Mischwerkzeug 27 mit insgesamt vier Klingen 18. Die Klingen 18 stehen seitlich von einer Welle 17 ab. In der Figur 6 wird angedeutet, wie im Schnitt gezeigte Arme 14 eines Kupplungselements 13 zwischen jeweils zwei Klingen 18 hineinreichen, damit eine Drehung des Mischwerkzeugs 27 auf den Adapter 8 und damit auf das Zerkleinerungswerkzeug 4 übertragen wird. Eine jede Klinge 18 weist eine Schneidkante 28 und eine stumpfe gegenüberliegende Kante 29. Eine Schneidkante 28 läuft im Schnitt gesehen spitz zu, was bei der stumpfen Kante 29 nicht der Fall ist. Wird das Mischwerkzeug entgegengesetzt zur Schneidrichtung entlang des in der Figur 6 gezeigten Pfeils gedreht, dann wird bei hinreichend geringen Drehgeschwindigkeiten eine Speise nicht oder nicht im nennenswerten Umfang zerkleinert.

## Patentansprüche

1. Speisenzubereitungsgerät (1) mit einem Speisenzubereitungsgefäß (15), mit einem drehbaren Mischwerkzeug zum Mischen und/oder Zerkleinern einer Speise in einem Bodenbereich des Speisenzubereitungsgefäßes (15), mit einer Steuerungseinheit, mit der die Drehzahl für das Mischwerkzeug (27) eingestellt werden kann, wobei durch die Steuerungseinheit für das Mischwerkzeug (27) eine Drehzahl von wenigstens 5000 Umdrehungen pro Minute, vorzugsweise von wenigstens 8000 Umdrehungen pro Minute, eingestellt werden kann, wobei ein Auffangkorb (2) in das Speisenzubereitungsgefäß (15) eingesetzt werden kann oder eingesetzt ist oder auf dem Speisenzubereitungsgefäß lösbar positioniert ist, mit einem drehbaren Zerkleinerungswerkzeug (4) zum Zerkleinern von Speisen, wobei das Zerkleinerungswerkzeug (4) relativ zu dem Auffangkorb (2) derart angeordnet oder anordbar ist, dass eine Speise nach der Zerkleinerung mittels des Zerkleinerungswerkzeugs (4) schwerkraftbedingt nach unten fällt, um im Auffangkorb (2) aufgefangen zu werden, **dadurch gekennzeichnet dass** das Speisenzubereitungsgefäß flüssigkeitsdicht ist, und das Mischwerkzeug eine von einer Welle abstehende Klinge umfasst

2. Speisenzubereitungsgerät (1) nach dem vorhergehenden Anspruch mit einem Elektromotor, der sowohl das drehbare Mischwerkzeug (27) als auch das Zerkleinerungswerkzeug (4) durch eine gemeinsame zweiteilige Welle (17, 8) antreiben kann.

3. Speisenzubereitungsgerät (1) nach einem der vorhergehenden Ansprüche, **dadurch gekennzeichnet, dass** das Speisenzubereitungsgerät (1) ein Heizelement zum Erhitzen einer Speise in dem Speisenzubereitungsgefäß (15) aufweist.

4. Speisenzubereitungsgerät (1) nach einem der vorhergehenden Ansprüche, **dadurch gekennzeichnet, dass** die Steuerungseinheit dazu eingerichtet ist, über eine Ausgabeeinrichtung Führungsinformationen an einen Benutzer auszugeben, die dazu dienen, den Benutzer durch einzelne Vorbereitungs- und/oder Arbeitsschritte eines Speisenzubereitungsprozesses zu führen.

5. Speisenzubereitungsgerät (1) nach einem der vorhergehenden Ansprüche, **dadurch gekennzeichnet, dass** das Zerkleinerungswerkzeug (4) drehbar in einem Gehäuseteil (3) angeordnet ist, dass das Speisenzubereitungsgerät (1) einen Deckel (9) zum Abdecken des Gehäuseteils (2) mit einer Öffnung (6) zum Einführen zu zerkleinernder Speisen aufweist, und dass das Zerkleinerungswerkzeug (4) so angeordnet oder anordbar ist, dass durch die Öffnung (6) eingeführte Speisen nach Passage des Zerkleinerungswerkzeugs (4) in dem Auffangkorb (2) aufgefangen werden.

6. Speisenzubereitungsgerät (1) nach einem der vorhergehenden Ansprüche, **dadurch gekennzeichnet, dass** dieses ein Basisteil (23) mit einer Aufnahme (22) für das Speisenzubereitungsgefäß (15) umfasst.

7. Speisenzubereitungsgerät (1) nach dem vorhergehenden Anspruch, **dadurch gekennzeichnet, dass** das Basisteil (23) eine Eingabeeinrichtung für das Einstellen einer Drehzahl umfasst, mit der das Mischwerkzeug (27) und das Zerkleinerungswerkzeug (4) gedreht werden können.

8. Speisenzubereitungsgerät (1) nach einem der vorhergehenden Ansprüche, **dadurch gekennzeichnet, dass** das Speisenzubereitungsgefäß (15) einen seitlich abstehenden Griff (21) umfasst.

9. Zerkleinerungsaufsatz für ein Einsetzen in ein Speisenzubereitungsgefäß oder auf ein Speisenzubereitungsgefäß eines Speisenzubereitungsgeräts nach einem der vorhergehenden Ansprüche, welches einen Auffangkorb (2), einen Adapter (8), ein Zerkleinerungswerkzeug (4) und einen Deckel (9) umfasst, wobei der Auffangkorb (2) eine Führung (10) für den Adapter (8) umfasst, wobei die Oberseite des Adapters mit dem Zerkleinerungswerkzeug (4) verbunden ist oder verbunden werden kann, wobei der Adapter das Zerkleinerungswerkzeug (4) drehbar lagern kann, wobei der Deckel (9) als Öffnung einen Stutzen (6) umfasst, und ein Stößel (7) vorhanden ist, der in den Stutzen (6) hineingesteckt werden kann,**dadurch gekennzeichnet**, dassder Adapter (8) an seiner Unterseite ein Kupplungselement mit zumindest zwei außermittig angeordneten Armen (14) umfasst, die nach unten abstehen.

10. Zerkleinerungsaufsatz nach dem vorhergehenden Anspruch, wobei der Auffangkorb (2) keinen seitlich angebrachten Griff umfasst und/oder ein oder zwei an der Oberseite angebrachte Griffe umfasst

11. Zerkleinerungsaufsatz nach einem der zwei vorhergehenden Ansprüche, wobei sich der Auffangkorb (2) nach oben konisch aufweitet.

12. Zerkleinerungsaufsatz nach einem der drei vorhergehenden Ansprüche, wobei sich die Führung im Auffangkorb (2) und der Adapter (8) nach oben konisch verjüngen.

13. Zerkleinerungsaufsatz nach einem der drei vorhergehenden Ansprüche, wobei der Auffangkorb (2) im Schnitt kreisrund ist.

14. Speisenzubereitungsgerät (1) nach einem der vorhergehenden Ansprüche 1 bis 8, wobei dieses den Zerkleinerungsaufsatz (1) nach einem der Ansprüche 9 bis 13 umfasst.

15. Verfahren zum Zerkleinern einer Speise unter Nutzung eines Speisenzubereitungsgeräts (1) nach einem der vorhergehenden Ansprüche, wobei das Zerkleinerungswerkzeug für ein Zerkleinern immer mit einer geringeren Drehgeschwindigkeit gedreht wird als die größte Drehgeschwindigkeit, mit der das Mischwerkzeug (27) gedreht werden kann.

## Claims

1. Food preparation appliance (1) with a food preparation vessel (15), with a rotatable mixing tool for mixing and/or chopping a food in a bottom region of the food preparation vessel (15), with a control unit with which the rotational speed for the mixing tool (27) can be set, wherein a rotational speed of at least 5000 revolutions per minute, preferably of at least 8000 revolutions per minute, can be set by the control unit for the mixing tool (27), wherein a collecting basket (2) can be inserted or is inserted into the food preparation vessel (15) or is detachably positioned on the food preparation vessel, with a rotatable chopping tool (4) for chopping food, wherein the chopping tool (4) is arranged or can be arranged relative to the collecting basket (2) in such a way that, after chopping by means of the chopping tool (4), a food falls downwards due to gravity in order to be collected in the collecting basket (2), **characterized in that** the food preparation vessel is liquid-tight and the mixing tool comprises a blade protruding from a shaft.

2. Food preparation appliance (1) according to the preceding claim with an electric motor which can drive both the rotatable mixing tool (27) and the chopping tool (4) through a common two-part shaft (17, 8).

3. Food preparation appliance (1) according to one of the preceding claims, **characterized in that** the food preparation appliance (1) comprises a heating element for heating a food in the food preparation vessel (15).

4. Food preparation appliance (1) according to one of the preceding claims, **characterized in that** the control unit is configured to output guidance information to a user via an output device, which information serves to guide the user through individual preparation and/or working steps of a food preparation process.

5. Food preparation appliance (1) according to one of the preceding claims, **characterized in that** the chopping tool (4) is rotatably arranged in a housing part (3), **in that** the food preparation appliance (1) has a lid (9) for covering the housing part (2) with an opening (6) for introducing food to be chopped, and **in that** the chopping tool (4) is arranged or can be arranged such that food introduced through the opening (6) is collected in the collecting basket (2) after passage of the chopping tool (4).

6. Food preparation appliance (1) according to one of the preceding claims, **characterized in that** it comprises a base part (23) with a receiving device (22) for the food preparation vessel (15).

7. Food preparation appliance (1) according to the preceding claim, **characterized in that** the base part (23) comprises an input device for setting a rotational speed with which the mixing tool (27) and the chopping tool (4) can be rotated.

8. Food preparation appliance (1) according to one of the preceding claims, **characterized in that** the food preparation vessel (15) comprises a laterally protruding handle (21).

9. Chopping attachment for insertion into a food preparation vessel or onto a food preparation vessel of a food preparation appliance according to one of the preceding claims, comprising a collecting basket (2), an adapter (8), a chopping tool (4) and a lid (9), wherein the collecting basket (2) comprises a guide (10) for the adapter (8), wherein the upper side of the adapter is or can be connected to the chopping tool (4), wherein the adapter can rotatably support the chopping tool (4), wherein the lid (9) comprises a socket (6) as an opening, and a plunger (7) is present which can be inserted into the socket (6), **characterized in that** the adapter (8) comprises a coupling element on its underside with at least two eccentrically arranged arms (14) which protrude downwards.

10. Chopping attachment according to the preceding claim, wherein the collecting basket (2) does not comprise a handle attached to the side and/or comprises one or two handles attached to the upper side.

11. Chopping attachment according to one of the two preceding claims, wherein the collecting basket (2) widens conically towards the top.

12. Chopping attachment according to one of the three preceding claims, wherein the guide in the collecting basket (2) and the adapter (8) conically taper towards the top.

13. Chopping attachment according to one of the three preceding claims, wherein the collecting basket (2) is circular in section.

14. Food preparation appliance (1) according to one of the preceding claims 1 to 8, wherein this comprises the chopping attachment (1) according to one of claims 9 to 13.

15. Method for chopping a food using a food preparation appliance (1) according to one of the preceding claims, wherein the chopping tool is always rotated for chopping at a lower rotational speed than the highest rotational speed at which the mixing tool (27) can be rotated.

## Revendications

1. Appareil de préparation d'aliments (1) avec un récipient de préparation d'aliments (15), avec un outil de mélange rotatif pour mélanger et/ou broyer un aliment dans une zone de fond du récipient de préparation d'aliments (15), avec une unité de commande avec laquelle la vitesse de rotation pour l'outil de mélange (27) peut être réglée, dans lequel l'unité de commande permet de régler une vitesse de rotation d'au moins 5000 tours par minute, de préférence d'au moins 8000 tours par minute, pour l'outil de mélange (27), dans lequel un panier collecteur (2) peut être inséré ou est inséré dans le récipient de préparation d'aliments (15) ou est positionné de manière amovible sur le récipient de préparation d'aliments, avec un outil de broyage rotatif (4) pour broyer des aliments, dans lequel l'outil de broyage (4) est disposé ou peut être disposé par rapport au panier collecteur (2) de telle sorte qu'un aliment, après avoir été broyé au moyen de l'outil de broyage (4), tombe par gravité vers le bas pour être recueilli dans le panier collecteur (2), **caractérisé en ce que** le récipient de préparation d'aliments est étanche aux liquides, et l'outil de mélange comprend une lame faisant saillie d'un arbre.

2. Appareil de préparation d'aliments (1) selon la revendication précédente avec un moteur électrique qui peut entraîner à la fois l'outil de mélange rotatif (27) et l'outil de broyage (4) par un arbre commun en deux parties (17, 8).

3. Appareil de préparation d'aliments (1) selon l'une des revendications précédentes, **caractérisé en ce que** l'appareil de préparation d'aliments (1) comprend un élément chauffant pour chauffer un aliment dans le récipient de préparation d'aliments (15).

4. Appareil de préparation d'aliments (1) selon l'une des revendications précédentes, **caractérisé en ce que** l'unité de commande est conçue pour délivrer à un utilisateur, par l'intermédiaire d'un dispositif de sortie, des informations de guidage qui servent à guider l'utilisateur à travers les différentes étapes de préparation et/ou de travail d'un processus de préparation d'aliments.

5. Appareil de préparation d'aliments (1) selon l'une des revendications précédentes, **caractérisé en ce que** l'outil de broyage (4) est disposé de manière rotative dans une partie de boîtier (3), **en ce que** l'appareil de préparation d'aliments (1) présente un couvercle (9) pour recouvrir la partie de boîtier (2) avec une ouverture (6) pour l'introduction d'aliments à broyer, et **en ce que** l'outil de broyage (4) est disposé ou peut être disposé de telle sorte que des aliments introduits par l'ouverture (6) sont recueillis dans le panier collecteur (2) après le passage de l'outil de broyage (4).

6. Appareil de préparation d'aliments (1) selon l'une des revendications précédentes, **caractérisé en ce que** celui comprend une partie de base (23) avec un logement (22) pour le récipient de préparation d'aliments (15).

7. Appareil de préparation d'aliments (1) selon la revendication précédente, **caractérisé en ce que** la partie de base (23) comprend un dispositif d'entrée pour le réglage d'une vitesse de rotation avec laquelle l'outil de mélange (27) et l'outil de broyage (4) peuvent être mis en rotation.

8. Appareil de préparation d'aliments (1) selon l'une des revendications précédentes, **caractérisé en ce que** le récipient de préparation d'aliments (15) comprend une poignée (21) faisant saillie latéralement.

9. Accessoire de broyage destiné à être inséré dans un récipient de préparation d'aliments ou sur un récipient de préparation d'aliments d'un appareil de préparation d'aliments selon l'une des revendications précédentes, qui comprend un panier collecteur (2), un adaptateur (8), un outil de broyage (4) et un couvercle (9), dans lequel le panier collecteur (2) comprend un guide (10) pour l'adaptateur (8), dans lequel la face supérieure de l'adaptateur est reliée ou peut être reliée à l'outil de broyage (4), dans lequel l'adaptateur peut supporter l'outil de broyage (4) de manière rotative, dans lequel le couvercle (9) comprend une tubulure (6) en tant qu'ouverture, et un poussoir (7) est présent, qui peut être inséré dans la tubulure (6), **caractérisé en ce que** l'adaptateur (8) comprend sur sa face inférieure un élément d'accouplement avec au moins deux bras (14) disposés de manière excentrée, qui font saillie vers le bas.

10. Accessoire de broyage selon la revendication précédente, dans lequel le panier collecteur (2) ne comprend pas de poignée montée latéralement et/ou comprend une ou deux poignées montées sur la face supérieure.

11. Accessoire de broyage selon l'une des deux revendications précédentes, dans lequel le panier collecteur (2) s'évase en cône vers le haut.

12. Accessoire de broyage selon l'une des trois revendications précédentes, dans lequel le guide dans le panier de réception (2) et l'adaptateur (8) se rétrécissent en cône vers le haut.

13. Accessoire de broyage selon l'une des trois revendications précédentes, dans lequel le panier collecteur (2) est circulaire en coupe.

14. Appareil de préparation d'aliments (1) selon l'une des revendications précédentes 1 à 8, dans lequel celui comprend l'accessoire de broyage (1) selon l'une des revendications 9 à 13.

15. Procédé pour le broyage d'un aliment en utilisant un appareil de préparation d'aliments (1) selon l'une des revendications précédentes, dans lequel l'outil de broyage est mis en rotation pour un broyage toujours à une vitesse de rotation inférieure à la plus grande vitesse de rotation à laquelle l'outil de mélange (27) peut être mis en rotation.
